# EUROPEAN PATENT APPLICATION

(11) **EP 4 810 190 A1**
(43) Date of publication of application: **23.09.2026**
(21) Application number: 23958977.3
(22) Date of filing: 21.11.2023
(51) Int. Cl.: B23K 26/362, B23K 26/082, B23K 26/03, B23K 26/0622, H01M 50/566, H01M 4/04

(54) **LASER MACHINING APPARATUS AND METHOD**

(30) Priority: 16.11.2023 KR 20230158773
(71) Applicant: SAMSUNG SDI CO., LTD., Yongin-si, Gyeonggi-do 17084 (KR)
(72) Inventor: CHOI, Kyu Chul, Suwon-si Gyeonggi-do 16678 (KR)
(74) Representative: Bardehle Pagenberg Partnerschaft mbB Patentanwälte Rechtsanwälte
(86) International application number: PCT/KR2023/018787
(87) International publication number: WO 2025/105550

(57) **Abstract**

The present disclosure relates to a laser processing apparatus and method, and technical challenges to be solved are directed to providing a laser processing apparatus and method, which can change processing recipes (processing conditions) according to the material and thickness of a processing target. To this end, the present disclosure provides a laser processing apparatus including a laser generator configured to generate a laser beam, a scanner configured to process a processing target by radiating a laser output from the laser generator, a moving unit configured to move the scanner, a vision unit configured to capture an image of the processing target processed by the scanner, and a control unit configured to analyze a thermal deformation trend of a processing area based on the image of the processing target captured through the vision unit, change a processing recipe based on the thermal deformation trend, and control at least one of the laser generator, the scanner, and the moving unit according to the changed processing recipe.

## Description

### [Technical Field]

The present disclosure relates to a laser processing apparatus and method for processing a processing target using a laser.

### [Background Art]

Secondary batteries are charged and discharged by allowing ions of an electrolyte put between positive and negative electrodes insulated by a separator to move between the positive and negative electrodes. An electrode used for the positive and negative electrodes of the secondary battery includes an electrode body constituting an electrode and an electrode active material with which the electrode body is coated. The electrode body may generally be formed by processing a highly conductive metal, such as aluminum (Al) and copper (Cu), into the form of a sheet, a thin plate, or a foil.

An electrode plate (electrode film) for forming an electrode assembly is manufactured in a form in which a portion of the electrode plate is coated with an active material and the remaining portion is not coated with the active material and exposes an electrode body. The uncoated portion exposing the electrode body is processed to function as an electrode terminal for connecting the positive and negative electrodes to the outside when constituting the electrode assembly (the positive electrode, the negative electrode, and a separator). To enable such processing, an electrode film is formed by coating a thin plate conductor, which constitutes the electrode body, with an active material and is in a state of being not identified by being processed.

To this end, a notching device is provided. The notching device is a device for forming a terminal portion by cutting portions of an uncoated portion of the electrode film and a coating portion coated with the active material. To this end, the notching device forms a terminal portion by cutting a portion of the uncoated portion using a punch or laser.

Conventionally, the notching device using a punch was mainly used, but recently, a device using a laser has been used for notching, and a proportion of the use of the notching device using a laser is increasing because damage to an electrode is less than that of a punch and efficient production is possible.

At the time of processing (cutting) an electrode plate using a laser, a quality change due to mechanical characteristics such as a material and a thickness of the electrode plate occurs. In addition, when the electrode plate is processed using the same processing recipe (processing condition), there is a disadvantage in that it is difficult to find a processing condition in which both a foil portion and a coating portion are satisfied and a quality change due to thermal deformation occurs even after processing.

The above-described information disclosed in the background technology of the invention is only for improving the understanding for the background of the present invention, and thus may include information not constituting the related art.

### [Disclosure]

### [Technical Problem]

The object of the present invention is provide a laser processing apparatus and method for changing processing recipes (processing conditions) according to a material and a thickness of a processing target.

However, the object of the present invention is not limited to the above-described object, and other objects that are not mentioned will be able to be clearly understood by those skilled in the art from the following description of the invention.

### [Technical Solution]

A laser processing apparatus according to one embodiment of the present invention for achieving the object analyzes a thermal deformation trend of a processing area based on an image of a processing target and changes processing recipes based on the thermal deformation trend.

### [Advantageous Effects]

According to the present invention, by changing the processing recipes (processing conditions) according to the material and thickness of the processing target, it is possible to secure an optimal processing recipe (processing condition) and quality.

According to the present invention, by changing the processing recipes (processing conditions) of the foil portion and the coating portion based on the thermal deformation trend of the foil portion and the coating portion during processing of the processing target, it is possible to find the processing recipe (processing condition) in which both the foil portion and the coating portion are satisfied, thereby securing the optimal quality of the foil portion and the coating portion.

However, the effects obtainable through the present invention are not limited to the above-described effects, and other technical effects not mentioned will be able to be clearly understood by those skilled in the art from the description of the invention set forth below.

### [Description of Drawings]

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic view illustrating a laser processing apparatus according to an embodiment of the present invention.
FIG. 2 is a detailed view illustrating the laser processing apparatus illustrated in FIG. 1.
FIG. 3 is a cross-sectional view illustrating an electrode plate according to one embodiment of the present invention.
FIG. 4 is a view illustrating an example of a laser processing path of the electrode plate according to one embodiment of the present invention.
FIG. 5 is a view illustrating an example of thermal deformation caused by processing of the electrode plate according to one embodiment of the present invention.
FIG. 6 is a view illustrating an example of a section by thermal deformation of a foil portion and a coating portion according to one embodiment of the present invention.
FIG. 7 is a view illustrating an example for describing a focus of a laser beam according to one embodiment of the present invention.
FIG. 8 is a view illustrating a form of a laser direct hit section according to one embodiment of the present invention.
FIG. 9 is a view for describing a laser processing method according to one embodiment of the present invention.

### [Modes of the Invention]

Hereinafter, preferred embodiments of the present invention will be described in detail with reference to the accompanying drawings. Prior to this, terms or words used in this specification and claims should not be construed as being limited to ordinary or dictionary meanings, and should be interpreted as meanings and concepts consistent with the technical spirit of the present invention based on the principle that the inventor may appropriately define the concept of terms in order to describe his/her own invention in the best possible manner. Therefore, it should be understood that the embodiments described in this specification and the configurations shown in the drawings are only some of the most preferred embodiments of the present invention and do not represent all of the technical spirit of the present invention, and that there may be various equivalents and modifications that can replace them at the time of filing the present application. In addition, as used herein, "comprise, include" and/or "comprising, including" specifies the presence of the stated shapes, numbers, steps, operations, members, elements, and/or groups thereof, and does not exclude the presence or addition of one or more other shapes, numbers, operations, members, elements, and/or groups. In addition, when describing embodiments of the present invention, "may" and "can be" may include "one or more embodiments of the present invention."

In addition, to aid in understanding the invention, the accompanying drawings may not be drawn to actual scale, and the dimensions of some components may be exaggerated. In addition, the same reference numerals may be assigned to the same components in different embodiments.

A reference to two compared objects being "identical" means being "substantially identical." Accordingly, substantially identical may include cases having a deviation considered low in the art, for example, a deviation within 5%. In addition, that a certain parameter is uniform in a given region may mean that it is uniform from an average perspective.

Although the first, second, etc. are used to describe various components, it goes without saying that these components are not limited by these terms. These terms are used solely to distinguish one component from another, and unless specifically stated to the contrary, a first component may of course also be a second component.

Throughout the specification, unless specifically stated to the contrary, each component may be singular or plural.

That an arbitrary configuration is disposed "above (or below)" a component or "on (or under)" a component means not only that the arbitrary configuration is disposed in contact with the upper surface (or lower surface) of the component, but also that another configuration may be interposed between the component and the arbitrary configuration disposed on (or under) the component.

In addition, when a component is described as being "connected," "coupled," or "linked" to another component, it should be understood that the components may be directly connected or linked to each other, but another component may be "interposed" between each component, or each component may be "connected," "coupled," or "linked" through another component. In addition, when a part is said to be electrically coupled to another part, this includes not only the case of being directly connected but also the case of being connected with another element interposed therebetween.

Throughout the specification, "A and/or B" means A, B, or A and B, unless specifically stated to the contrary. That is, "and/or" includes all combinations or any combination of a plurality of listed items. When "C to D" is stated, this means C or more and D or less, unless specifically stated to the contrary.

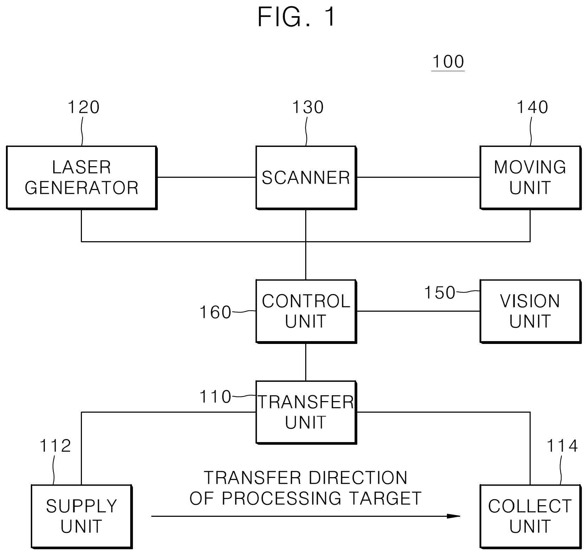

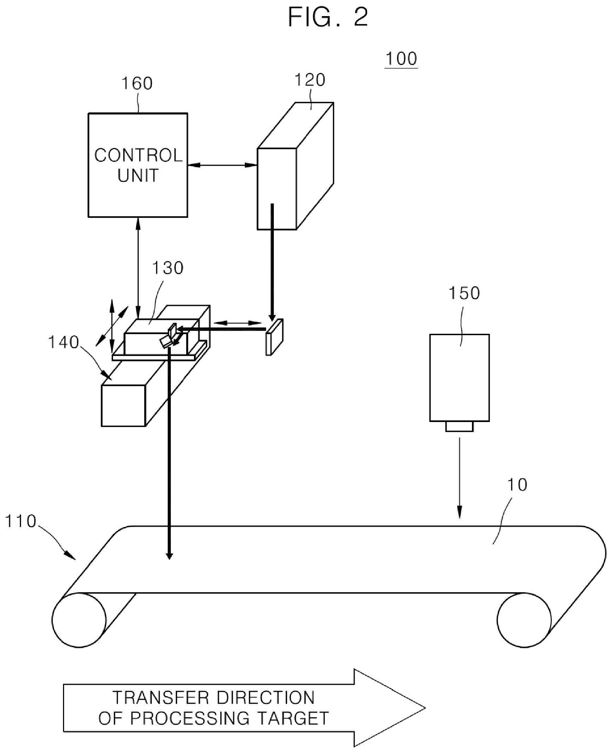

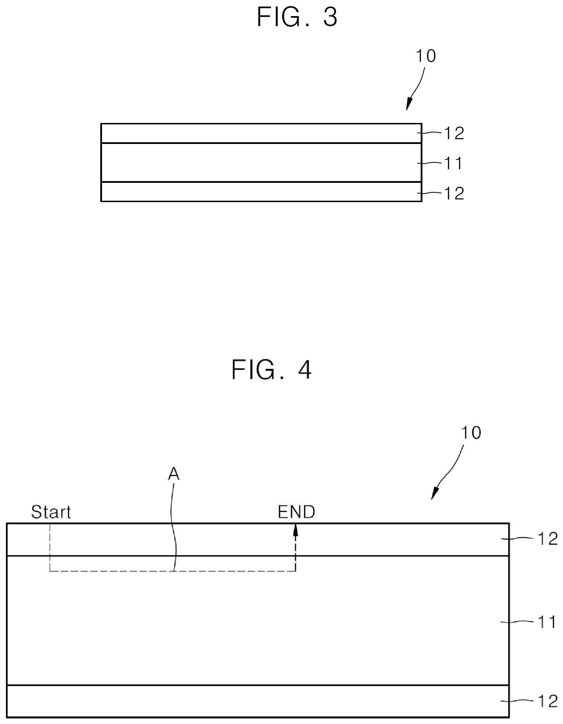

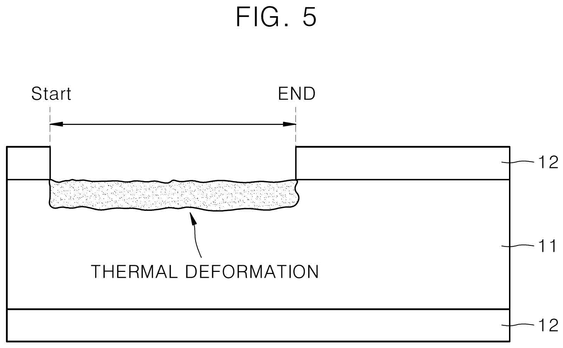

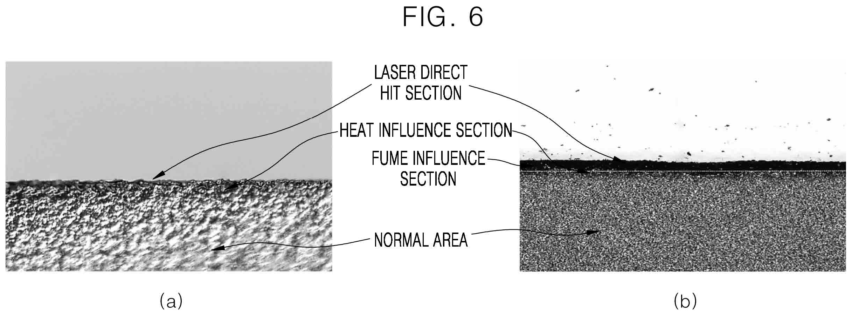

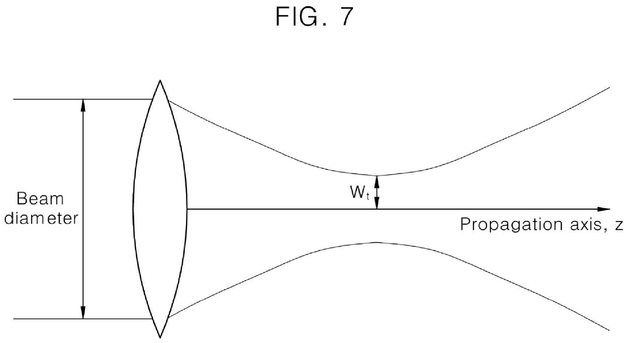

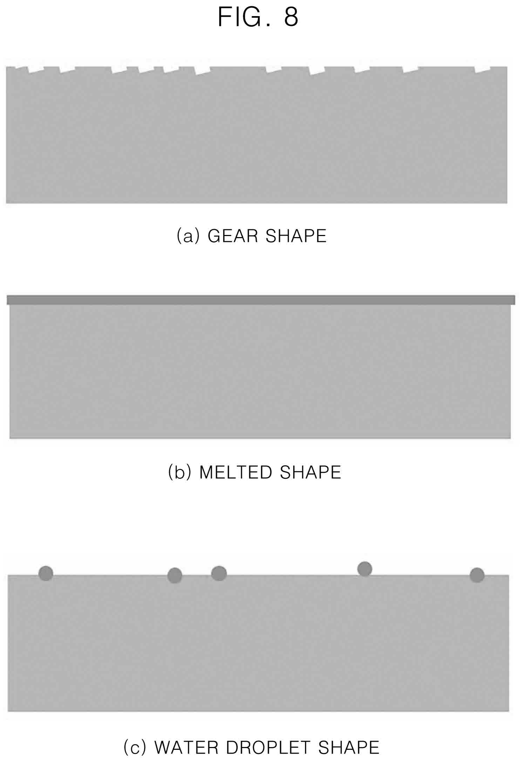

FIG. 1 is a schematic view illustrating a laser processing apparatus according to an embodiment of the present invention, FIG. 2 is a detailed view illustrating the laser processing apparatus illustrated in FIG. 1, FIG. 3 is a cross-sectional view illustrating an electrode plate according to one embodiment of the present invention, FIG. 4 is a view illustrating an example of a laser processing path of the electrode plate according to one embodiment of the present invention, FIG. 5 is a view illustrating an example of thermal deformation caused by processing of the electrode plate according to one embodiment of the present invention, FIG. 6 is a view illustrating an example of a section by thermal deformation of a foil portion and a coating portion according to one embodiment of the present invention, FIG. 7 is a view illustrating an example for describing a focus of a laser beam according to one embodiment of the present invention, and FIG. 8 is a view illustrating a form of a laser direct hit section according to one embodiment of the present invention.

Referring to FIGS. 1 and 2, a laser processing apparatus 100 according to one embodiment of the present invention includes a transfer unit 110, a laser generator 120, a scanner 130, a moving unit 140, a vision unit 150, and a control unit 160.

The transfer unit 110 may transfer a processing target 10 from a supply unit 112 to a collect unit 114. Here, the processing target 10 may be an electrode plate.

The transfer unit 110 may transfer the electrode plate 10 wound around an outer circumferential surface of a supply roll provided in the supply unit 112 to the collect unit 114, and a portion of the electrode plate 10 may be cut by a laser beam in a process of being transferred and then wound around an outer circumferential surface of a collect roll provided in the collect unit 114.

The laser generator 120 may generate a laser beam by adjusting at least one of laser power, a pulse repetition rate (PRR (Hz)), and a beam duration according to a control signal of the control unit 160. In other words, the laser generator 120 may output the laser beam by adjusting at least one of the power, the pulse repetition rate, and the beam duration of the laser beam according to a power control value, a pulse repetition rate control value, and a beam duration control value included in the control signal.

The laser beam output from the laser generator 120 may be transmitted to the scanner 130 through an optical member (not illustrated) disposed between the laser generator 120 and the scanner 130 and including one or more of an optical mirror, a beam dump, and a beam expander forming a beam transmission path.

The scanner 130 may cut the processing target 10 by radiating the laser beam output from the laser generator 120 to a designated position of the processing target 10. At this time, the scanner 130 may cut a portion of the processing target 10 by adjusting a processing speed according to the control signal of the control unit 160 and radiating the laser beam to the processing target 10. In other words, the scanner 130 may adjust the processing speed according to a processing speed control value included in the control signal and radiate the laser beam to the processing target 10.

The scanner 130 may control the processing speed of the laser beam by driving a lens (not illustrated) and a mirror (not illustrated) provided therein. In other words, the scanner 130 may change a position irradiated with the laser beam while tilting two mirrors included in the lens, and in this case, a rotational speed of the mirror may be the processing speed. Therefore, the scanner 130 may adjust the processing speed by adjusting the rotational speed of the mirror according to the processing speed control value.

In addition, the scanner 130 may adjust a shape and a magnitude of the laser beam by driving the lens (not illustrated) and the mirror (not illustrated) provided therein.

The scanner 130 may cut the processing target 10 by radiating the laser beam in a direction perpendicular to a laser beam transmission path or in a direction parallel to the ground. Therefore, the scanner 130 may be configured to move or rotate along three axes (a horizontal axis, a vertical axis, and an axis perpendicular to these two axes).

The moving unit 140 may move the scanner 130 in X-axis, Y-axis, and Z-axis directions.

Sometimes the same processing target 10 transferred by the transfer unit 110 may have a height difference. Therefore, the moving unit 140 moves the scanner 130 in the Z-axis direction so that products with a height difference may also be cut without quality change.

In addition, the moving unit 140 may adjust the position of the scanner 130 by moving the scanner 130 along an X-axis and a Y-axis.

The moving unit 140 may be implemented as an actuator composed of a motor (e.g., a servo motor), a gear, and the like in order to move the scanner 130 along three axes, and the movement of the moving unit 140 may be controlled by the control unit 160.

The laser beam may be radiated to the processing target 10 while moved in the X-axis, Y-axis, and Z-axis directions by the moving unit 140 and the scanner 130, and a processing area in a substantially quadrangular shape may be formed at one side of the processing target 10 by the laser beam. Here, the processing target 10 may be an electrode plate 10 (electrode film).

As illustrated in FIG. 3, the electrode plate 10 may include a foil portion 12 at which the electrode body is exposed, and a coating portion 11 coated with an active material. Here, the electrode body may be a metal such as aluminum or copper, and the active material may be a material such as carbon powder, but other known materials may be used as the electrode body or active material.

The foil portion 12 exposing the electrode body may be processed to function as an electrode terminal for connecting the positive and negative electrodes to an external unit when the electrode assembly (the positive electrode, the negative electrode, and the separator) is formed. Therefore, the foil portion 12 is configured to transmit or receive a current to or from the coating portion 11 and may be made of copper, aluminum, or the like.

The electrode plate 10 may be formed with terminal portions of the positive and negative electrodes through a cutting process using a laser beam and divided by being cut at a length suitable for the size of the electrode assembly. At this time, the scanner 130 may cut the electrode plate 10 by radiating the laser beam along a laser processing path.

Meanwhile, when the electrode plate 10 is processed (cut) using the laser beam, a quality change occurs due to mechanical characteristics such as a material and a thickness of the electrode plate 10. In addition, when the electrode plate 10 is processed using the same processing recipe (processing condition), it is difficult to find a processing condition in which the quality of both the foil portion 12 and the coating portion 11 are satisfied, and thermal deformation occurs to affect a product quality even after processing.

For example, a case in which the electrode plate 10 is cut by radiating the laser beam along a laser processing path A illustrated in FIG. 4 will be described. In FIG. 4, the laser processing path A may be a continuous line that, starting at a predetermined point Start of the foil portion 12, is formed toward the front of the coating portion 11, then formed in a left-right direction of the electrode plate 10 in the coating portion 11, and formed from the coating portion 11 toward an edge END of the foil portion 12.

When the electrode plate 10 is processed (cut) by radiating the laser beam along the laser processing path A, a processing area B of the electrode plate 10 may be thermally deformed by the laser beam as illustrated in FIG. 5. The thermal deformation degrades the product quality.

Therefore, there is a need for a technology of reducing thermal deformation after processing the electrode plate 10 so that the electrode plate 10 may maintain a constant quality. Since the electrode plate 10 is the processing target 10, hereinafter, the electrode plate 10 will be described as the processing target 10.

Therefore, the laser processing apparatus 100 according to the present invention may include the vision unit 150 for capturing an image of the processing target 10 processed by the scanner 130, and the control unit 160 for changing the processing recipe necessary for laser processing based on the image of the processing target captured by the vision unit 150.

The vision unit 150 may capture the image of the processing target 10 processed by the scanner 130 and transmit the captured image of the processing target 10 to the control unit 160.

The vision unit 150 is configured in a structure in which a camera (not illustrated) installed on an upper portion of the transfer unit 110 through which the processing target 10 moves may capture the image of the processing target 10. Therefore, the vision unit 150 may include a camera installed on the upper portion of the transfer unit 110 and a lighting (not illustrated) for illuminating the processing target 10. When the processing target 10 is transferred through the transfer unit 110, the vision unit 150 may illuminate the processing target 10 from the top to enable clear reading.

The control unit 160 is a device for controlling the transfer unit 110, the laser generator 120, the scanner 130, the moving unit 140, and the vision unit 150, and may be implemented as a central processing unit (CPU), a system on chip (SOC), or a processor, control a plurality of hardware or software components connected to the control unit 160 by driving an operating system or an application, and perform processing and calculating on various types of data. The control unit 160 may be configured to execute at least one command stored in a memory (not illustrated) and store execution result data in the memory.

The control unit 160 may analyze the thermal deformation trend of the processing area based on the image of the processing target captured through the vision unit 150, change the processing recipe based on the thermal deformation trend, and control at least one of the laser generator 120, the scanner 130, and the moving unit 140 according to the changed processing recipe.

Hereinafter, an operation of the control unit 160 will be described in detail.

The control unit 160 may control at least one of the laser generator 120, the scanner 130, and the moving unit 140 to initially process the processing target 10 according to a processing recipe set for the processing target 10.

Here, the processing recipe is a preset processing condition according to the processing target 10 and may include a processing speed, laser power, a PRR (Hz), a beam duration, and the like. The processing speed may be a rotational speed of the mirror included in the scanner 130. The laser power may be an output (%) of a laser beam. The PRR (Hz) may be the number of repetitions of a laser beam per second. The beam duration may be a duration of one laser beam.

The pulse laser does not continuously scan the laser beam but scans the laser beam at regular intervals. When the processing speed of the laser beam is increased, an interval between beams is increased at the same scanning rate, resulting in different processing characteristics. The laser power adjusts a maximum output in units of percentage (%), and the power becomes stronger or weaker according to the rate. Since the PRR (Hz) is the number of repetitions of a laser beam per second, the PRR (Hz) affects the processing characteristics. Since the beam duration is a duration of one laser beam, the beam duration affects processing quality. Therefore, the processing recipe may include the processing speed, the laser power, the PRR (Hz), and the beam duration.

When initial processing is performed on the processing target 10, the control unit 160 may acquire a processing recipe set for the processing target 10 from the memory (not illustrated) and generate a control signal to adjust at least one of the processing speed, the laser power, the PRR (Hz), and the beam duration of the laser beam according to the acquired processing recipe.

In other words, since an absorption rate of the laser beam varies depending on the processing target 10, the control unit 160 may acquire a processing recipe set in consideration of the absorption rate of the laser beam according to a material of the processing target 10 from the memory. Then, the control unit 160 may transmit the control signal for the adjustment to the processing speed, the laser power, the PRR, and the beam duration of the laser beam included in the acquired processing recipe to at least one of the laser generator 120, the scanner 130, and the moving unit 140.

Since the processing speed is adjusted using the scanner 130, the control unit 160 may transmit the control signal including the processing speed control value to the scanner 130. The scanner 130 receiving the control signal may adjust the processing speed according to the processing speed control value included in the control signal.

Since the laser power, the PRR, and the beam duration are adjusted by the laser generator 120, the control unit 160 may transmit the control signal for adjusting at least one of the power, the PRR, and the beam duration to the laser generator 120. The laser generator 120 receiving the control signal may adjust at least one of the power, the PRR, and the beam duration of the laser beam according to at least one of the power control value, the PRR control value, and the beam duration control value included in the control signal.

The laser processing apparatus 100 processes the processing target 10 by radiating the laser beam according to the preset processing recipe, and the processing target 10 moves in a transfer direction through the transfer unit 110.

As described above, since the processing recipe is set for the material of the processing target 10, the control unit 160 may process the processing target 10 according to the processing recipe set for the material of the processing target 10.

However, even when the processing target 10 is the same, the quality of the processing target 10 may be changed by various variables such as height deviation, shaking during movement, and foreign substances.

Therefore, it is necessary to adjust the processing recipe to prevent the quality of the processing target 10 from being changed by various variables.

To this end, the vision unit 150 may capture the image of the processed processing target 10 and transmit the captured image of the processing target to the control unit 160.

The control unit 160 may analyze the thermal deformation trend in the processing area based on the image of the processing target captured through the vision unit 150. In other words, the control unit 160 may analyze the thermal deformation trend including at least one of a thermal deformation width, a cut shape, a color, and a shade in the processing area of the image of the processing target. Here, the thermal deformation width may be a width of an area deformed by heat generated by laser processing.

When the thermal deformation trend is analyzed, the control unit 160 may classify the processing area into at least one of a direct irradiation section, a heat influence section, and a fume influence section based on the thermal deformation trend.

When the processing target 10 is cut using a laser, the processing area may be classified into a laser direct hit section directly hit by the laser and an influence section by heat energy. The influence section by heat energy may be classified into the heat influence section and the fume influence section based on at least one of the color and the shade. The laser direct hit section may be a surface irradiated with the laser beam and may be regarded as a starting point of a cutting surface (processing surface). For example, the laser direct hit section may be a surface irradiated with a circular laser beam of 30 to 50 µm.

As illustrated in FIG. 6, the processing area processed by the laser beam may be classified into the laser direct hit section, the heat influence section, and the fume influence section. Referring to FIG. 6, it can be seen that the foil portion 12 and the coating portion 11 have different shapes, colors, shades, and the like in the laser direct hit section, the heat influence section, and the fume influence section. It can be seen that the heat influence section of the foil portion 12 is mainly in a gradient form as illustrated in FIG. 6A. It can be seen that the heat influence section of the coating portion 11 is mainly in a soot form as illustrated in FIG. 6B. With regard to the fume influence section, it can be seen that the fume influence section is rarely found in the foil portion 12, is mainly found in the coating portion 11, and has a gradation area similar to that of the heat influence section generated during processing of the foil portion 12.

Therefore, the control unit 160 may classify the heat influence section and the fume influence section based on at least one of the color and the shade of the influence section by heat energy. For example, the control unit 160 may classify a section in which a color value is greater than or equal to a critical value or a shade level is greater than or equal to a critical level into the heat influence section in the influence section by heat energy. In addition, the control unit 160 may classify a section in which the color value is smaller than the critical value or the shade level is smaller than the critical level in the influence section by heat energy into the fume influence section.

As illustrated in FIG. 6, it can be seen that the foil portion 12 and the coating portion 11 have different thermal deformation trends.

Therefore, the control unit 160 needs to differently make the processing recipe (processing condition) of the foil portion 12 and the processing recipe (processing condition) of the coating portion 11. In other words, the control unit 160 may change the processing recipe according to the material and thickness of the foil portion 12 and change the processing recipe according to the material and thickness of the coating portion 11. In other words, the control unit 160 may change the processing recipe based on the thermal deformation trend of the foil portion 12 and change the processing recipe based on the thermal deformation trend of the coating portion 11.

The control unit 160 may change the processing recipe based on the cut shape of the laser direct hit section. In addition, the control unit 160 may change the processing recipe of the heat influence section or the fume influence section based on at least one of the color and the shade of the heat influence section or the fume influence section.

First, the control unit 160 may adjust the size of the laser beam based on the laser direct hit section.

When an uncut portion is present in the laser direct hit section, the control unit 160 may adjust the beam size by controlling the moving unit 140 to move the scanner 130 in a direction of gravity (Z-axis). In other words, when an uncut portion is present in the processing area of the processing target image, the control unit 160 may adjust the beam size by moving the moving unit 140 along the Z axis.

When an F-Theta lens is used in the scanner 130, the laser beam converges (focuses) to one point and then spreads as illustrated in FIG. 7.

When the laser beam converges (focuses) to one point, the laser beam may cut (process) the processing target 10.

When the laser beam does not converge (focus) to one point or is defocused, the power (energy) is not concentrated on the laser beam and only heat is transferred, and thus the laser beam may not cut (process) the processing target 10. In this case, the control unit 160 should find the focus of the laser beam.

In order to find the focus of the laser beam, the control unit 160 should adjust a distance between the scanner 130 and the processing target 10. To this end, the control unit 160 may transmit a control signal for adjusting a position of the scanner 130 to the moving unit 140. Then, the moving unit 140 may find the focus of the laser beam by moving the scanner 130 in the Z-axis direction according to the control signal. In other words, the moving unit 140 may find the focus of the laser beam by moving up or down the scanner 130.

As described above, the control unit 160 may adjust the size of the laser beam by adjusting a Z-axis height of the scanner 130 according to full cutting or half cutting. Here, the full cutting may refer to a case in which the cut is perfectly well, and the half cutting may refer to a case in which a bridge or the like remains.

When the half cutting occurs, the control unit 160 may control the moving unit 140 to move the scanner 130 in the Z-axis direction. When the full cutting is performed while the scanner 130 is moving, the control unit 160 may control the moving unit 140 to stop the movement of the scanner 130.

When the full cutting is not performed even when the scanner 130 is moved, the control unit 160 may change the laser power and the PRR (Hz) to find a processing recipe (processing condition) in which the full cutting is performed. When the full cutting is not performed even after a value of the processing recipe is changed, the manager may check the laser processing apparatus 100, replace a protective glass, and re-perform processing.

In addition, the control unit 160 may classify the shape of the laser direct hit section into at least one of a gear shape, a melted shape, and a water droplet shape according to the cut shape of the laser direct hit section. In other words, the control unit 160 may classify the laser direct hit section into three types: a gear shape, a melted shape, and a water droplet shape as illustrated in FIG. 8.

The gear shape may be generated when the processing speed is higher than a reference speed or when power (energy) is lower than reference power. The melted shape may be generated when the constant processing speed and power (energy) are maintained. The water droplet shape may be generated when the processing speed is lower than the reference speed or when the power (energy) exceeds the reference power.

Therefore, when the laser direct hit section has the gear shape or water droplet shape, the control unit 160 may adjust the processing speed and the laser power in a current processing recipe. Then, the control unit 160 may transmit the control signal including the processing speed control value and the power control value to the scanner 130 and the laser generator 120. The scanner 130 receiving the control signal may adjust the processing speed according to the processing speed control value. The laser generator 120 receiving the control signal may adjust the power according to the power control value.

For example, in the case of the gear shape, the control unit 160 may make the processing speed lower than the current processing speed and the power higher than the current power by transmitting a processing speed control value that makes the processing speed lower than the current processing speed and a power control value that makes the laser power higher than the current laser power to the scanner 130 and the laser generator 120. In the case of the water droplet shape, the control unit 160 may make the processing speed higher than the current processing speed and the power lower than the current power by transmitting a processing speed control value that makes the processing speed higher than the current processing speed and a power control value that makes the laser power lower than the current laser power to the scanner 130 and the laser generator 120.

When the laser direct hit section is in the melted shape, the control unit 160 may adjust at least one of the PRR, the beam duration, and the processing speed in the current processing recipe. Then, the control unit 160 may transmit the control signal including the PRR control value, the beam duration control value, and the processing speed control value to the laser generator 120 and the scanner 130. The laser generator 120 receiving the control signal may adjust the PRR and the beam duration according to the PRR control value and the beam duration control value. The scanner 130 receiving the control signal may adjust the processing speed according to the processing speed control value.

The control unit 160 may classify the heat influence section and the fume influence section based on at least one of the color and the shade with respect to the influence section by heat energy in the processing area.

In the case of the heat influence section, light energy generated from the laser generator 120 is converted into heat energy to affect a nearby area, and thus the color of the heat influence section mainly changes.

Therefore, the control unit 160 may adjust at least one of the processing speed, the laser power, the PRR, and the beam duration based on at least one of a width, a color, and a shade level of the heat influence section. At this time, the control unit 160 may transmit the control signal including at least one of the processing speed control value, the power control value, the pulse repetition rate control value, and the beam duration control value to the scanner 130 and the laser generator 120. The scanner 130 receiving the control signal may adjust the processing speed according to the processing speed control value. The laser generator 120 receiving the control signal may adjust the power, the PRR, and the beam duration of the laser according to the power control value, the PRR control value, and the beam duration control value.

It can be seen that the heat influence section of the foil portion 12 is mainly in a gradient form as illustrated in FIG. 6A. It can be seen that the heat influence section of the coating portion 11 is mainly in a soot form as illustrated in FIG. 6B.

Therefore, in the case of the heat influence section of the foil portion 12, the control unit 160 may change the processing recipe according to a width and a color of the gradient. In the case of the heat influence section of the coating portion 11, the control unit 160 may change the processing recipe according to a shade level and a width of the soot.

In the case of the heat influence section, the control unit 160 may change the processing recipe in the order of the laser power, the processing speed, the PRR, and the beam duration.

For example, when a color value of the heat influence section of the foil portion 12 is greater than or equal to a reference color value, the control unit 160 may make the laser power lower than the current laser power. For example, when the processing target 10 is being processed at 80% power and the color value of the heat influence section is greater than or equal to the reference color value, the control unit 160 may reduce the power to 70 to 75%. When the color value is greater than or equal to the reference color value despite the reduction in the power, the control unit 160 may make the processing speed lower than the current processing speed. When the color value is greater than or equal to the reference color value despite the reduction in the processing speed, the control unit 160 may make the PRR smaller than the current PRR or the beam duration greater than the current beam duration.

The control unit 160 may adjust at least one of the processing speed, the laser power, the PRR, and the beam duration based on at least one of a width and a shade level of the fume influence section. At this time, the control unit 160 may transmit the control signal including at least one of the processing speed control value, the power control value, the pulse repetition rate control value, and the beam duration control value to the scanner 130 and the laser generator 120. The scanner 130 receiving the control signal may adjust the processing speed according to the processing speed control value. The laser generator 120 receiving the control signal may adjust the power, the PRR, and the beam duration of the laser according to the power control value, the PRR control value, and the beam duration control value.

With regard to the fume influence section, referring to FIG. 6, it can be seen that the fume influence section is rarely found in the foil portion 12, is mainly found in the coating portion 11, and has a gradation area similar to that of the heat influence section generated during processing of the foil portion 12. Therefore, in the case of the fume influence section of the coating portion 11, the control unit 160 may change the processing recipe according to a width and a color of the gradient. In other words, the control unit 160 may adjust at least one of the processing speed, the laser power, the PRR, and the beam duration based on the gradation and the color of the fume influence section of the coating portion 11.

As described above, the control unit 160 may control each of the processing recipes of the foil portion 12 and the coating portion 11. In other words, the control unit 160 may change the processing recipe based on the thermal deformation trend of the foil portion 12 and change the processing recipe based on the thermal deformation trend of the coating portion 11.

In addition, the control unit 160 may change the processing recipe for each laser processing path. In other words, when the foil portion 12 is present in the laser processing path during processing of the processing target 10 along the laser processing path, the control unit 160 may change the processing recipe based on the thermal deformation trend of the foil portion 12. In addition, when the coating portion 11 is present in the laser processing path, the control unit 160 may change the processing recipe based on the thermal deformation trend of the coating portion 11.

When the processing target 10 is cut (processed) along the laser processing path illustrated in FIG. 4, the control unit 160 may change the processing recipe (processing condition) from the foil portion 12 to the coating portion 11 or from the coating portion 11 to the foil portion 12. For example, the foil portion 12 may be processed at a processing speed of 3 m/s, power of 50%, a PRR of 800 kHz, and a beam duration of 30 ns, and the coating portion 11 may be processed at a processing speed of 1 m/s, power of 80%, a PRR of 2000 kHz and a beam duration of 240 ns.

As described above, the control unit 160 may process the foil portion 12 and the coating portion 11 using different processing recipes during processing of the processing target 10. Therefore, according to the present invention, it is possible to find the processing recipe (processing condition) in which both the foil portion 12 and the coating portion 11 are satisfied and maintain the qualities of the foil portion 12 and the coating portion 11.

In addition, the control unit 160 may compare a thermal deformation width of the processing area to a preset reference range and determine that the processing target 10 is defective when the thermal deformation width is out of a reference range.

When the thermal deformation width of the processing area is close to an upper or lower limit of the reference range, the control unit 160 may change the processing recipe so that the thermal deformation width is smaller than the upper limit or change the processing recipe so that the thermal deformation width is greater than the lower limit.

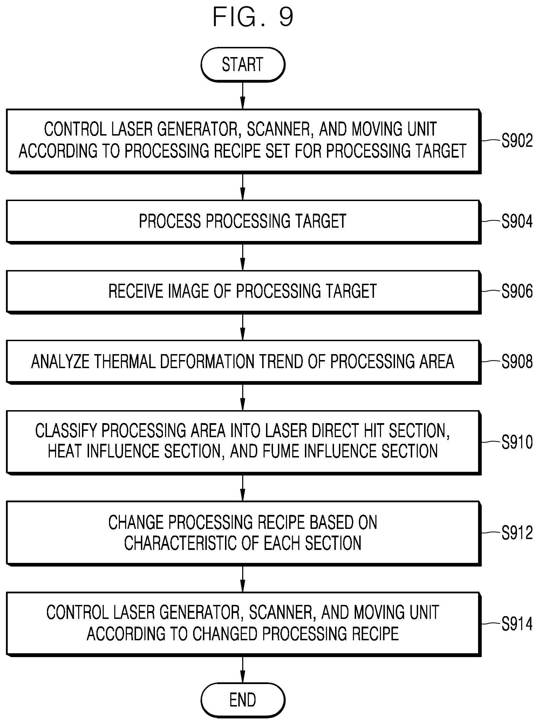

FIG. 9 is a view for describing a laser processing method according to one embodiment of the present invention.

Referring to FIG. 9, the control unit 160 controls at least one of the laser generator 120, the scanner 130, and the moving unit 140 according to the processing recipe set for the processing target 10 (S902). When performing initial processing, the control unit 160 may acquire the processing recipe set for the processing target 10 from the memory (not illustrated) and generate the control signal to adjust at least one of the processing speed, the laser power, the PRR (Hz), and the beam duration of the laser beam according to the acquired processing recipe. The scanner 130 receiving the control signal may adjust the processing speed according to the processing speed value of the processing recipe. The laser generator 120 receiving the control signal may adjust at least one of the power, the PRR, and the beam duration of the laser beam according to at least one of the power control value, the PRR control value, and the beam duration value of the processing recipe included in the control signal.

The laser generator 120, the scanner 130, and the moving unit 140 are adjusted according to the processing recipe by performing operation S902, the control unit 160 controls the processing target 10 to be processed (S904). At this time, the scanner 130 processes the processing target 10 by radiating the laser beam according to the processing recipe, and the processing target 10 moves in the transfer direction through the transfer unit 110. Then, the vision unit 150 may capture an image of the processing target 10 processed by the vision unit 150 and transmit the captured image of the processing target 10 to the control unit 160.

After operation S904 is performed, when the image of the processing target is received from the vision unit 150 (S906), the control unit 160 analyzes the thermal deformation trend of the processing area based on the image of the processing target (S908). In other words, the control unit 160 may analyze the thermal deformation trend including at least one of a thermal deformation width, a cut shape, a color, and a shade in the processing area of the image of the processing target.

After operation S908 is performed, the control unit 160 classifies the processing area into at least one of the laser direct hit section, the heat influence section, and the fume influence section based on the thermal deformation trend (S910). When the processing target 10 is cut using a laser, the processing area may be classified into the laser direct hit section directly hit by the laser and the influence section by heat energy. The influence section by heat energy may be classified into the heat influence section and the fume influence section based on at least one of the color and the shade.

After operation S910 is performed, the control unit 160 changes the processing recipe based on the characteristics of at least one section of the laser direct hit section, the heat influence section, and the fume influence section (S912) and controls at least one of the laser generator 120, the scanner 130, and the moving unit 140 according to the changed processing recipe (S914).

For example, when the half cutting is performed in the laser direct hit section, the control unit 160 may change the processing recipe of at least one of the laser power and the PRR (Hz). In addition, the control unit 160 may classify the shape of the laser direct hit section into at least one of the gear shape, the melted shape, and the water droplet shape according to the cut shape of the laser direct hit section. The control unit 160 may change the processing recipe of at least one of the processing speed and the laser power in the case of the gear shape or water droplet shape and change the processing recipe of at least one of the PRR, the beam duration, and the processing speed in the case of the melted shape.

In addition, the control unit 160 may change the processing recipe for at least one of the processing speed, the laser power, the PRR, and the beam duration based on at least one of the width, the color, and the shade of the heat influence section.

In addition, the control unit 160 may change the processing recipe of at least one of the processing speed, the laser power, the PRR, and the beam duration based on at least one of the width and the shade level of the fume influence section.

As described above, according to the present invention, by changing the processing recipes (processing conditions) according to the material and thickness of the processing target 10, it is possible to secure an optimal processing recipe (processing condition) and quality.

According to the present invention, by changing the processing recipes (processing conditions) of the foil portion and the coating portion based on the thermal deformation trend of the foil portion and the coating portion during processing of the processing target, it is possible to find the processing recipe (processing condition) in which both the foil portion and the coating portion are satisfied, thereby securing the optimal quality of the foil portion and the coating portion.

As used in the specification, the term "unit" may include a unit implemented in hardware, software, or firmware and for example, may be used interchangeably with terms such as a logic, a logic block, a component, or a circuit. The term "unit" may be an integrated component or a minimum unit of the component or a portion thereof that performs one or more functions. For example, according to one embodiment, the term "unit" may be implemented in the form of an application-specific integrated circuit (ASIC).

The implementation described in the specification may be implemented, for example, as a method or process, device, a software program, a data stream, or a signal. Although described only in the context of the implementation of a single form (e.g., only a method is described), the implementations of the described features may also be implemented in other forms (e.g., devices or programs). The device may be implemented with appropriate hardware, software, firmware, or the like. The method may be implemented by a device such as a processor, which is generally a processing device including a computer, a microprocessor, an integrated circuit, or a programmable logic device. The processor includes a communication device such as computers, cell phones, portable/personal digital assistant (PDA), and other devices, which facilitate information communication between end-users.

Although the present invention has been described with reference to embodiments illustrated in the accompanying drawings, it is merely illustrative, and those skilled in the art to which the present invention pertains will understand that various modifications and other equivalent embodiments are possible. Therefore, the technical scope of the present invention should be determined by the appended claims.

## Claims

1. A laser processing apparatus comprising:
a laser generator configured to generate a laser beam;
a scanner configured to process a processing target by radiating a laser output from the laser generator;
a moving unit configured to move the scanner;
a vision unit configured to capture an image of the processing target processed by the scanner; and
a control unit configured to analyze a thermal deformation trend of a processing area based on the image of the processing target captured through the vision unit, change a processing recipe based on the thermal deformation trend, and control at least one of the laser generator, the scanner, and the moving unit according to the changed processing recipe.

2. The laser processing apparatus of claim 1, wherein the processing recipe includes at least one of a processing speed, laser power, a pulse repetition rate (PRR), and a beam duration.

3. The laser processing apparatus of claim 1, wherein the control unit is configured to:
control at least one of the laser generator, the scanner, and the moving unit to initially process the processing target according to a processing recipe set for the processing target, and
change the processing recipe based on the image of the processing target upon receiving the image of the processing target from the vision unit.

4. The laser processing apparatus of claim 1, wherein the control unit analyzes the thermal deformation trend including at least one of a thermal deformation width, a cut shape, a color, and a shade of the processing area in the image of the processing target.

5. The laser processing apparatus of claim 4, wherein the control unit classifies the processing area into at least one of a laser direct hit section, a heat influence section, and a fume influence section based on the thermal deformation trend, and changes the processing recipe based on a characteristic of each classified section.

6. The laser processing apparatus of claim 5, wherein the control unit adjusts a beam size of the laser beam by controlling the moving unit to move the scanner in a direction of gravity when an uncut portion is present in the laser direct hit section.

7. The laser processing apparatus of claim 6, wherein the control unit changes a processing recipe of at least one of laser power and a pulse repetition rate (PRR (Hz)) when full cutting is not performed by the movement of the scanner.

8. The laser processing apparatus of claim 5, wherein the control unit is configured to:
classify a shape of the laser direct hit section into at least one of a gear shape, a melted shape, and a water droplet shape according to a cut shape of the laser direct hit section, and
change a processing recipe of at least one of a processing speed and laser power in the case of the gear shape or water droplet shape and change a processing recipe of at least one of a pulse repetition rate (PRR), a beam duration, and the processing speed in the case of the melted shape.

9. The laser processing apparatus of claim 5, wherein the control unit changes a processing recipe for at least one of a processing speed, laser power, a processing speed (PRR), and a beam duration based on at least one of a width, a color, and a shade of the heat influence section.

10. The laser processing apparatus of claim 5, wherein the control unit changes a processing recipe for at least one of a processing speed, laser power, a processing speed (PRR), and a beam duration based on at least one of a width and a shade level of the fume influence section.

11. The laser processing apparatus of claim 1, wherein the processing target includes a foil portion and a coating portion, and
the control unit changes the processing recipe based on a thermal deformation trend of the foil portion, and changes the processing recipe based on a thermal deformation trend of the coating portion.

12. The laser processing apparatus of claim 11, wherein the control unit changes the processing recipe based on the thermal deformation trend of the foil portion in the case of the foil portion in a laser processing path during processing of the processing target along the laser processing path, and changes the processing recipe based on the thermal deformation trend of the coating portion in the case of the coating portion in the laser processing path.

13. A laser processing method comprising:
controlling, by a control unit, at least one of a laser generator, a scanner, and a moving unit to initially process a processing target according to a processing recipe set for the processing target;
receiving, by the control unit, an image of the processed processing target from a vision unit;
analyzing, by the control unit, a thermal deformation trend of a processing area based on the image of the processing target;
changing, by the control unit, the processing recipe based on the thermal deformation trend; and
controlling, by the control unit, at least one of the laser generator, the scanner, and the moving unit according to the changed processing recipe.

14. The laser processing method of claim 13, wherein the processing recipe includes at least one of a processing speed, laser power, a pulse repetition rate (PRR), and a beam duration.

15. The laser processing method of claim 13, wherein, in the analyzing of the thermal deformation trend of the processing area,
the control unit analyzes the thermal deformation trend including at least one of a thermal deformation width, a cut shape, a color, and a shade of the processing area in the image of the processing target.

16. The laser processing method of claim 15, wherein, in the changing of the processing recipe,
the control unit classifies the processing area into at least one of a laser direct hit section, a heat influence section, and a fume influence section based on the thermal deformation trend, and changes the processing recipe based on a characteristic of each classified section.

17. The laser processing method of claim 13, wherein the processing target includes a foil portion and a coating portion, and
in the changing of the processing recipe,
the control unit changes the processing recipe based on a thermal deformation trend of the foil portion, and changes the processing recipe based on a thermal deformation trend of the coating portion.

18. The laser processing method of claim 17, wherein, in the changing of the processing recipe,
the control unit changes the processing recipe based on the thermal deformation trend of the foil portion in the case of the foil portion in a laser processing path during processing of the processing target along the laser processing path, and changes the processing recipe based on the thermal deformation trend of the coating portion in the case of the coating portion in the laser processing path.

19. A laser processing method comprising:
generating, by a laser generator, a laser beam;
processing, by a scanner, a processing target by radiating the laser beam output from the laser generator to the processing target;
capturing, by a vision unit, an image of the processing target processed by the scanner; and
analyzing, by a control unit, a thermal deformation trend of a processing area based on the image of the processing target captured through the vision unit, changing a processing recipe based on the thermal deformation trend, and controlling at least one of the laser generator, the scanner, and a moving unit according to the changed processing recipe.

20. The laser processing method of claim 19, wherein, in the controlling, the control unit is configured to:
analyze the thermal deformation trend including at least one of a thermal deformation width, a cut shape, a color, and a shade of the processing area in the image of the processing target;
classify the processing area into at least one of a laser direct hit section, a heat influence section, and a fume influence section based on the thermal deformation trend; and
change the processing recipe based on a characteristic of each classified section.
